(19)

Europäisches
Patentamt
European
Patent Office
Office européen
des brevets

(11) **EP 3 457 649 A1**

(12) **EUROPEAN PATENT APPLICATION**
published in accordance with Art. 153(4) EPC

(43) Date of publication:
**20.03.2019 Bulletin 2019/12**

(21) Application number: **17795626.5**

(22) Date of filing: **12.05.2017**

(51) Int Cl.:
**H04L 27/00** (2006.01)

(86) International application number:
**PCT/CN2017/084211**

(87) International publication number:
**WO 2017/194008 (16.11.2017 Gazette 2017/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **13.05.2016 CN 201610317146**

(71) Applicant: **ZTE Corporation
Shenzhen, Guangdong 518057 (CN)**

(72) Inventor: **WEI, Jidong
Shenzhen
Guangdong 518057 (CN)**

(74) Representative: **Petit, Maxime et al
Ipsilon
Le Centralis
63, avenue du Général Leclerc
92340 Bourg-la-Reine (FR)**

(54) **DOWNLINK SIGNAL PROCESSING METHOD AND DEVICE, AND BASE STATION**

(57) The present application provides a downlink signal processing method and device, and a base station. The downlink signal processing method includes: obtaining a frequency offset pre-compensation instruction according to a terminal parameter; and delivering the frequency offset pre-compensation instruction to a downlink physical layer of a base station to instruct the downlink physical layer of the base station to start or stop, according to the frequency offset pre-compensation instruction, carrying out frequency offset correction to a corresponding downlink signal. The solution provided by the present disclosure is able to timely and effectively carry out frequency offset correction to downlink data by obtaining a frequency offset pre-compensation instruction according to a terminal parameter and delivering the frequency offset pre-compensation instruction to a downlink physical layer of a base station to instruct the downlink physical layer of the base station to start or stop, according to the frequency offset pre-compensation instruction, carrying out frequency offset correction to a corresponding downlink signal; the solution provided by the present disclosure is not only applicable to a scenario where a single terminal is involved, but also to a multi-terminal scenario, thereby resolving the problem in the existing art that the signal power may be declined to the trough after superposition due to a frequency offset difference among multiple downlink signals.

**EP 3 457 649 A1**

obtain a frequency offset pre-compensation instruction according to a terminal parameter — 11

deliver the frequency offset pre-compensation instruction to a downlink physical layer of a base station to instruct the downlink physical layer of the base station to start or stop, according to the frequency offset pre-compensation instruction, carrying out frequency offset correction to a corresponding downlink signal — 12

Fig. 1

## Description

### TECHNICAL FIELD

The present application relates to the field of communication technology, and particularly, to a downlink signal processing method, a device, and a base station.

### BACKGROUND

As the development of wireless communication technology, various fields and diverse scenarios have put forward extremely high demand for transmission speed, but some particular scenarios, such as a high speed scenario, an airline scenario and the like, have high requirements involving frequency synchronization problem. In a case of low center frequency, influence of Doppler frequency offset caused by speed is insufficient to significantly challenge the LTE technology, but in a case of high or very high center frequency, the problem of Doppler frequency offset in a high-speed scenario will severely effect system performance, for example, a problem of how to deal with frequency offset estimation has brought about a huge challenge.

In addition, super cell networking is usually employed in the existing art in order to avoid frequently switching between high-speed cells, but this will greatly influence downlink performance. For example, a terminal may receive at least two signals coming from different directions, and due to a Doppler frequency offset difference between the two signals, the signal power may be declined to a trough after superposition, thereby resulting in deterioration of downlink performance.

Regarding to this problem, some documents or the industry generally adopt a method of frequency offset pre-compensation. However, no effective method has been proposed as to how to carry out pre-compensation, for example, no effect solution for multiple UE has been proposed.

### SUMMARY

The present disclosure provides a downlink signal processing method, a device and a base station, resolving the problem in the existing art that the signal power may be declined to the trough after superposition due to a frequency offset difference among multiple downlink signals.

In order to address the above-described technical problem, an embodiment of the present disclosure provides a downlink signal processing method, including: obtaining a frequency offset pre-compensation instruction according to a terminal parameter; and delivering the frequency offset pre-compensation instruction to a downlink physical layer of a base station to instruct the downlink physical layer of the base station to start or stop, according to the frequency offset pre-compensation instruction, carrying out frequency offset correction to a corresponding downlink signal.

The present disclosure further provides a downlink signal processing device, including: a first processing module configured to obtain a frequency offset pre-compensation instruction according to a terminal parameter; and a second processing module configured to deliver the frequency offset pre-compensation instruction to a downlink physical layer of a base station to instruct the downlink physical layer of the base station to start or stop, according to the frequency offset pre-compensation instruction, carrying out frequency offset correction to a corresponding downlink signal.

The present disclosure further provides a base station including the above-described downlink signal processing device.

The present disclosure further provides a downlink signal processing method, including: receiving a frequency offset pre-compensation instruction sent by a high layer of a base station; and starting or stopping, according to the frequency offset pre-compensation instruction, carrying out frequency offset correction to a corresponding downlink signal.

The present disclosure further provides a downlink signal processing device, including: a first receiving module configured to receive a frequency offset pre-compensation instruction sent by a high layer of a base station; and a third processing module configured to start or stop, according to the frequency offset pre-compensation instruction, carrying out frequency offset correction to a corresponding downlink signal.

The present disclosure further provides a base station including the above-described downlink signal processing device.

An embodiment of the present disclosure further provides a non-transient computer readable storage medium storing computer executable instructions, the computer executable instructions configured to perform the above-described method.

The present disclosure further provides an electronic apparatus (for example, a base station), including: at least one processor; and a memory in communication connection with the at least one processor; wherein the memory stores instructions executable by the at least one processor, the instructions, when executed by the at least one processor, causes the at least one processor to perform the above-described method.

The above-described technical solutions of the present disclosure have the following beneficial effects.

In the above solutions, the downlink signal processing method is able to timely and effectively carry out frequency offset correction to downlink data by obtaining a frequency offset pre-compensation instruction according to a terminal parameter and delivering the frequency offset pre-compensation instruction to a downlink physical layer of a base station to instruct the downlink physical layer of the base station to start or stop, according to the frequency offset pre-compensation instruction, carrying out frequency offset correction to a corresponding downlink signal. The method is not only applicable to a scenario where a single terminal is involved, but also to a multi-terminal scenario, thereby resolving the problem in the existing art that the signal power may be declined to a trough after superposition due to a large frequency offset difference among multiple downlink signals.

## BRIEF DESCRIPTION OF THE DRAWINGS

Fig. 1 is a schematic flow chart of a downlink signal processing method according to Embodiment 1 of the present disclosure;

Fig. 2 is a schematic flow chart of a downlink signal processing method according to Embodiment 2 of the present disclosure;

Fig. 3 is a schematic flow chart of a downlink signal processing method applied in an embodiment of the present disclosure;

Fig. 4 is a schematic diagram of a structure of a downlink signal processing device according to Embodiment 3 of the present disclosure;

Fig. 5 is a schematic diagram of a structure of a downlink signal processing device according to Embodiment 4 of the present disclosure; and

Fig. 6 is a schematic diagram of a structure of an electronic apparatus according to an embodiment of the present disclosure.

## DETAILED DESCRIPTION

In order to better clarify technical problems to be solved in the present disclosure, technical solutions and advantages, detailed description is presented below in conjunction with accompanying drawings and embodiments.

As regards the problem in the existing art that the signal power may be declined to a trough after superposition due to a large frequency offset difference among multiple downlink signals, the present disclosure provides multiple solutions as follows.

Embodiment 1

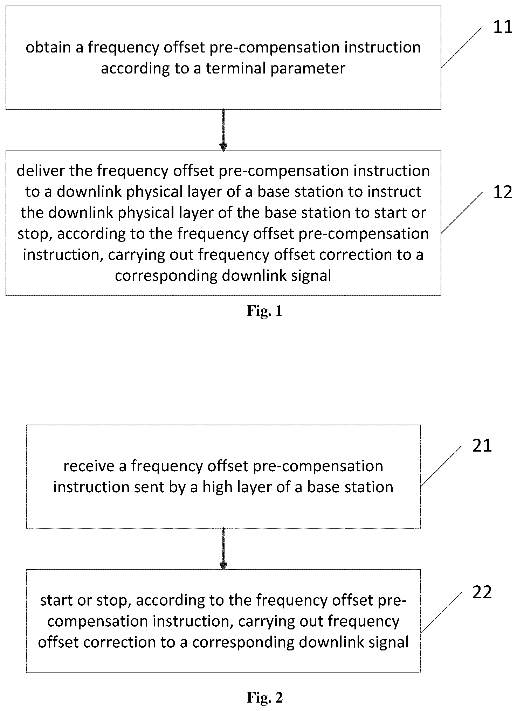

As shown in Fig. 1, a downlink signal processing method according to Embodiment 1 of the present disclosure includes step 11 to step 12.

At step 11, obtain a frequency offset pre-compensation instruction according to a terminal parameter.

At step 12, deliver the frequency offset pre-compensation instruction to a downlink physical layer of a base station to instruct the downlink physical layer of the base station to start or stop, according to the frequency offset pre-compensation instruction, carrying out frequency offset correction to a corresponding downlink signal.

The downlink signal processing method according to Embodiment 1 of the present disclosure is able to timely and effectively carry out frequency offset correction to downlink data by obtaining a frequency offset pre-compensation instruction according to a terminal parameter and delivering the frequency offset pre-compensation instruction to a downlink physical layer of a base station to instruct the downlink physical layer of the base station to start or stop, according to the frequency offset pre-compensation instruction, carrying out frequency offset correction to a corresponding downlink signal. The method is not only applicable to a scenario where a single terminal is involved, but also to a multi-terminal scenario, thereby resolving the problem in the existing art that the signal power may be declined to the trough after superposition due to a frequency offset difference among multiple downlink signals.

The terminal parameter includes a terminal frequency offset value or a terminal position.

If the frequency offset pre-compensation instruction is configured to instruct the downlink physical layer of the base station to start, according to the frequency offset pre-compensation instruction, carrying out frequency offset correction to the corresponding downlink signal, the step of delivering the frequency offset pre-compensation instruction to the downlink physical layer of the base station may also include: delivering a frequency offset pre-compensation value to the downlink physical layer of the base station.

Before the step of delivering the frequency offset pre-compensation value to the downlink physical layer of the base station, the method may also include: obtaining the frequency offset pre-compensation value by calculation based on the terminal frequency offset value, or the terminal frequency offset value and a signal power, or the terminal frequency offset value and a signal to interference plus noise ratio (SINR).

If the terminal frequency offset value is a terminal frequency offset value of terminals reported during a period of time, the obtained frequency offset pre-compensation value is applied to all antenna groups; if the terminal frequency offset value is a terminal frequency offset value of terminals on one antenna group, the obtained frequency offset pre-compensation value is applied only to that antenna group.

The step of obtaining the frequency offset pre-compensation instruction according to the terminal parameter may include: determining, according to a terminal frequency offset value of a scheduling terminal, whether to start or stop carrying out frequency offset correction to a corresponding downlink signal delivered by a pertaining antenna group, to obtain the frequency offset pre-compensation instruction; or, determining, according to a terminal frequency offset value maintained by a same terminal, whether to start or stop carrying out frequency offset correction to a downlink signal delivered to that terminal, to obtain the frequency offset pre-compensation instruction.

In other words, the frequency offset pre-compensation instruction of an antenna group level (for the same antenna group) or a terminal level (for the same terminal) is obtained according to the terminal frequency offset value, and the determination may be made according to a size or a direction of the terminal frequency offset value. If a condition is satisfied that sizes of a preset number of terminal frequency offset values are greater than a threshold with a preset probability, or if a condition is satisfied that directions of a preset number of terminal frequency offset values are in a same direction with a preset probability, it is determined to carry out pre-compensation; if the condition that sizes of the preset number of terminal frequency offset values are greater than the threshold with the preset probability is not satisfied, and the condition that directions of the preset number of terminal frequency offset values are in the same direction with the preset probability is not satisfied, it is determined not to carry out the pre-compensation.

Alternatively, it is directly determined whether there is a terminal frequency offset value maintained on the antenna group, and if there is, the pre-compensation is carried out; if there is not, the pre-compensation is not carried out.

Alternatively, according to an absolute value of a terminal frequency offset value of the same terminal on respective antenna groups, if a condition is satisfied that the absolute value is greater than a threshold with a preset probability, the pre-compensation is carried out on a downlink signal delivered to that terminal; if the condition that the absolute value is greater than the threshold with the preset probability is not satisfied, the pre-compensation is not carried out;

Alternatively, according to a terminal frequency offset value of a terminal on an antenna group, if the value is greater than a threshold, the pre-compensation is carried out when the antenna group delivers data to the terminal; if the value is not greater than the threshold, the pre-compensation is not carried out.

Considering a case of meeting-car (a phenomenon that there is a large difference among terminal frequency offset values maintained by a same antenna group, or that terminal frequency offset values maintained by a same antenna group are in opposite directions, that is, terminals are not at a same direction of motion), before the step of determining, according to the terminal frequency offset value of the scheduling terminal, whether to start or stop carrying out frequency offset correction to the corresponding downlink signal delivered by the pertaining antenna group, to obtain the frequency offset pre-compensation instruction, the method may also include: determining whether terminal frequency offset values maintained by a same antenna group belong to multiple terminals, and a difference between the terminal frequency offset value of each terminal exceeds a preset value.

If exceeding, the multiple terminals are divided into groups, and it is controlled so that a preset number of terminals on a same downlink subframe belong to a same group at the time of scheduling; and it is determined, according to a terminal frequency offset value of a scheduling terminal, whether to start or stop carrying out frequency offset correction to the corresponding downlink signal delivered by the pertaining antenna group, to obtain the frequency offset pre-compensation instruction.

If not exceeding, the step of determining, according to the terminal frequency offset value of the scheduling terminal, whether to start or stop carrying out frequency offset correction to the corresponding downlink signal delivered by the pertaining antenna group, to obtain the frequency offset pre-compensation instruction, is performed directly.

The classification into groups is made in such a manner that a difference among frequency offset values of terminals of a same group is smaller than a certain threshold, or frequency offset values of terminals of a same group are at a same direction.

An embodiment of the present disclosure also provides another determination method, the step of obtaining a frequency offset pre-compensation instruction according to a terminal parameter may include: determining, according to a terminal position, whether to start or stop carrying out frequency offset correction to the corresponding downlink signal delivered by the pertaining antenna group, to obtain the frequency offset pre-compensation instruction.

The terminal position refers to a real time position of a terminal.

Specifically, a position state of a terminal may be determined according to measurement information such as a path loss or a signal quality reported by the terminal, or measurement information maintained by the terminal. If a proportion of terminals at a far point position state is greater than a threshold, the pre-compensation is carried out; if the proportion of terminals at a far point position state is not greater than the threshold, the pre-compensation is not carried out.

When the position of the terminal is uncertain, the terminal is regarded as a terminal at a far point position state.

Embodiment 2

As shown in Fig. 2, a downlink signal processing method according to Embodiment 2 of the present disclosure includes step 21 to step 22.

At step 21, receive a frequency offset pre-compensation instruction sent by a high layer of a base station.

At step 22, start or stop, according to the frequency offset pre-compensation instruction, carrying out frequency offset correction to a corresponding downlink signal.

The downlink signal processing method according to Embodiment 2 of the present disclosure is able to timely and effectively carry out frequency offset correction to downlink data by receiving a frequency offset pre-compensation instruction sent by a high layer of a base station and starting or stopping, according to the frequency offset pre-compensation instruction, carrying out frequency offset correction to a corresponding downlink signal. The method is not only applicable to a scenario where a single terminal is involved, but also to a multi-terminal scenario, thereby resolving the problem in the existing art that the signal power may be declined to the trough after superposition due to a frequency offset difference among multiple downlink signals.

A frequency offset pre-compensation value for carrying out frequency offset correction may come from two sources.

First, if the frequency offset pre-compensation instruction is configured to instruct starting carrying out frequency offset correction to a corresponding downlink signal, the step of receiving the frequency offset pre-compensation instruction sent by the high layer of the base station may also include: receiving a frequency offset pre-compensation value sent by the high layer of the base station.

The step of starting or stopping, according to the frequency offset pre-compensation instruction, carrying out frequency offset correction to the corresponding downlink signal may include: starting, according to the frequency offset pre-compensation instruction and the frequency offset pre-compensation value, carrying out frequency offset correction to the corresponding downlink signal.

Second, after the step of receiving the frequency offset pre-compensation instruction sent by the high layer of the base station, the method may also include: obtaining the frequency offset pre-compensation value by calculation based on a terminal frequency offset value, or a terminal frequency offset value and a signal power, or a terminal frequency offset value and a signal to interference plus noise ratio (SINR).

The step of carrying out frequency offset correction to the corresponding downlink signal according to the frequency offset pre-compensation instruction may include: starting, according to the frequency offset pre-compensation instruction and the frequency offset pre-compensation value, carrying out frequency offset correction to the corresponding downlink signal.

The step of starting or stopping, according to the frequency offset pre-compensation instruction, carrying out frequency offset correction to the corresponding downlink signal may include: carrying out, according to the frequency offset pre-compensation instruction, frequency offset correction in time domain or frequency domain to a downlink signal delivered to a corresponding scheduling terminal by a same antenna group; or, carrying out, according to the frequency offset pre-compensation instruction, frequency offset correction in time domain or frequency domain to a downlink signal delivered to a same scheduling terminal.

The step of starting or stopping, according to the frequency offset pre-compensation instruction, carrying out frequency offset correction to the corresponding downlink signal may include: starting, according to the frequency offset pre-compensation instruction, carrying out frequency offset correction in frequency domain to the corresponding downlink signal, using the following calculation formula:

$$\tilde{Data}(k) = Data(k) \times e^{-j\Phi_m} + \sum_{\substack{l=-L \\ l \neq 0}}^{L} \frac{-\mathrm{PreFOV}_{UE_f}^{cpi} \times e^{-j(\Phi_m + \pi l / N_{ifft})}}{15000 \times l} \times Data(k+l)$$

l=-L, -L+1, ..., -1,1,2,..., L

where l denotes a number of interval subcarrier waves between a target subcarrier wave and a reference subcarrier wave, 2L+1 denotes a number of orders of a filter, $\phi_m$ denotes a compensation value for an initial phase of UE on the

sign $m$, $\Pr \text{eFOV}_{UE_f}^{cpi}$ denotes a pre-compensation value of the $f$-th UE on CPi, and $k$ is an index value of a subcarrier wave.

The downlink signal processing method according to an embodiment of the present disclosure is described below in conjunction with both a high layer of a base station and a downlink physical layer of a base station.

In the solution provided by an embodiment of the present disclosure, frequency offset correction is carried out to data of a downlink transmitter in connection with a history frequency offset value maintained by the base station side, preventing the phenomenon in which signal power may be declined to the trough after superposition due to a frequency offset difference among multiple downlink signals.

In the first step, a high layer (of a base station) determines, using history frequency offset values maintained on all antenna group CPs uplink activated, whether to start downlink frequency offset pre-compensation, and finally delivering an identifier of the determination result to a downlink PHY(a downlink physical layer of the base station).

The determination method performs the determination for every CP, and the determination may be performed using a size of an effective (that is, satisfying a preset condition, trusted, such as having a signal quality SR greater than a certain threshold) frequency offset value maintained by N consecutive uplink subframes. If a condition is satisfied that an absolute value of a frequency offset value of a maintained user is greater than m Hz with a certain probability, the downlink frequency offset pre-compensation is started; if the condition that the absolute value is greater than m Hz with a certain probability is not satisfied, the frequency offset pre-compensation is not carried out, and the method goes on to slide the uplink statistical window, until frequency offset effective values maintained on N consecutive uplink subframes satisfy the above-described determination condition. N is a positive integer greater than 1, and m is any one positive number or 0.

The determination may also be performed using a direction of an effective frequency offset value maintained by N consecutive uplink subframes. If a condition is satisfied that frequency offset values of the maintained users are at a same direction with a certain probability, the downlink frequency offset pre-compensation is started; if the condition that the values are at the same direction with the certain probability is not satisfied, the downlink frequency offset pre-compensation is not carried out, and the method goes on to slide the uplink statistical window, until the condition is satisfied.

It is also possible that, without focusing on the size and direction of the frequency offset value, the downlink frequency offset pre-compensation may be started on a CP as long as an effective frequency offset value is maintained on that CP.

The determination may also be performed according to the effective frequency offset value maintained on each CP by a user scheduled on each downlink subframe. According to the effective frequency offset value maintained on each CP by the downlink user scheduled within one statistical window, if a condition is satisfied that an absolute value of the maintained user frequency offset value is greater than m Hz with a certain probability, the downlink frequency offset pre-compensation is started; if the condition that the absolute value is greater than m Hz with a certain probability is not satisfied, the frequency offset pre-compensation is not carried out, and the method goes on to slide the uplink statistical window, until frequency offset effective values maintained on N consecutive uplink subframes satisfy the above-described determination condition.

It is to be noted that, in such situation where there are multiple users and there is a large difference among frequency offset values maintained by all the users or the frequency offset values maintained by all the users have opposite directions, that is, all of the users are not at a same direction of motion: if frequency offset pre-compensation of CP level is employed, the problem of how to perform downlink pre-compensation can be solved in the perspective of user scheduling. That is, it is ensured that all or majority of users scheduled on a same downlink subframe have frequency offsets with small difference or same direction. When implementing, frequency offset values of users maintained on different CPs may be classified into Class F, the classification is made so that a difference among frequency offset values of users of a same class is smaller than a certain threshold, or frequency offset values of users of a same class are at a same direction. As for ensuring frequency offset consistency of users scheduled on a same downlink subframe in the perspective of scheduling, when implementing, a method of performing pre-scheduling by frequency offset may be activated when this situation occurs (CP level meeting-car is addressed by scheduling, ensuring that frequency offset values on a same TTI are at a same direction and have similar sizes), as such, it is possible to prevent stress of scheduler caused by long time consideration of frequency offset factor (that is, performing scheduling considering frequency offset factor may be event triggered, preventing always performing scheduling considering frequency offset factor, which increases the pressure on the scheduler).

If downlink frequency offset pre-compensation is carried out by employing UE level, whether the pre-compensation is activated may be determined by monitoring a user effective frequency offset value maintained on one of the CPs, and may also be determined by monitoring an effective frequency offset value maintained on each of the CPs by each terminal. According to the determination condition of whether a frequency offset value maintained on each CP is greater than m Hz, if the condition is satisfied, the method starts carrying out the frequency offset pre-compensation of UE level to the user when the user performs downlink scheduling on the CP; if not satisfied, the method goes on to monitor, until frequency offset pre-compensation is activated.

Frequency offset pre-compensation employing UE level can resolve not only the problem of downlink frequency offset pre-compensation in a non-meeting-car scenario, but also the problem of downlink frequency offset pre-compensation in a meeting-car scenario. As for the frequency offset pre-compensation method of UE level, the method has a high complexity, suitable for measurement and demodulation employing demodulation reference signal DMRS. In a case where subband/full bandwidth measurement and demodulation is carried out employing CRS (Cell Reference Signal), influence is mild if the terminal employs subband measurement method, but if a full bandwidth measurement method is employed, the influence is significant. However, the present disclosure is not limited to pre-compensation of UE level employing CRS to perform demodulation and measurement, and is not limited to a terminal employing DMRS to perform demodulation.

Considering only the downlink frequency offset pre-compensation carried out in a non-meeting-car scenario, directivity of frequency offset requires consideration in the process of performing the determination as above, that is, if the proportion of frequency offset values which are at a certain direction is greater than a certain value, and a condition that the absolute value is greater than m Hz is satisfied, the frequency offset pre-compensation is carried out; or if a difference among frequency offset values of scheduled users is smaller than a certain threshold value, the frequency offset pre-compensation is started.

Considering frequency offset pre-compensation in a meeting-car scenario, in a case of normal schedule, a user scheduled on a same downlink subframe may originate from users of two cars in different directions, and at this time, if frequency offset pre-compensation is carried out, and if there is a bias to one of the directions, deterioration may be caused to the user of the other direction. Thus, the present disclosure takes into account, regarding the solution of the frequency offset pre-compensation in a meeting-car scenario, the fact that frequency offset values of users scheduled on a same downlink subframe are frequency offset values in a same direction, or that a difference in frequency offset values between the majority of users scheduled is very small, and then calculates a pre-compensation value using a frequency offset value maintained by a user scheduled on each downlink subframe. Without any doubt, limit to the downlink user schedule (limiting the direction and size of the frequency offset value at the time of scheduling) may apply only to frequency offset processing method in a meeting-car scenario, and may also guarantee, without distinguishing between meeting-car and non-meeting-car scenarios, that the difference in frequency offset values between users scheduled on each TTI is small.

With respect to the determination condition on whether to activate downlink frequency offset pre-compensation, the present disclosure provides another method in which activation of frequency offset pre-compensation is carried out by determining a position at which UE is located, that is, the frequency offset pre-compensation is not carried out when UE is at a near point, and the frequency offset pre-compensation is carried out when UE is at a medium-far point. As to the determination method of UE position, determination may be made by measurement information such as a path loss or a signal quality. In a case of multiple UEs, distribution of all the UEs at near, medium, and far positions may be determined by statistically processing effective measurement information reported by UE within a certain time window, and if the number of users at near points is greater than a certain proportion, the downlink frequency offset pre-compensation is not activated; if the number of users at near points is not greater than a certain proportion, the downlink frequency offset pre-compensation is activated;

The determination of UE position status may also be performed using effective measurement information maintained by UE scheduled on a downlink subframe each time, and if the number of users at near points is greater than a certain proportion, the downlink frequency offset pre-compensation is not activated; if the number of users at near points is not greater than a certain proportion, the downlink frequency offset pre-compensation is activated. In a case where there is no effective measurement information in the statistically processed UEs, these UEs are treated as in a fuzzy state, that is, the position at which the UE is located is not determined, but being involved in the activation determination (conservative treatment, regarding as a far point).

If downlink frequency offset pre-compensation is activated on a CP, during the compensation, the statistical window is checked constantly, and if the condition for activating the downlink frequency offset pre-compensation is not satisfied, the method stops carrying out frequency offset pre-compensation on that CP. The detection window for stopping the downlink frequency offset pre-compensation may have the same size as, or a different size than, the window for activating downlink pre-compensation. Whether to stop the downlink frequency offset pre-compensation may be determined in a manner of periodic determination, that is, it is determined whether it is necessary to stop the downlink frequency offset pre-compensation, periodically by the reported measurement information or frequency offset information maintained by UE scheduled by a current downlink subframe or the like; whether to stop the downlink frequency offset pre-compensation may be determined also in a manner of constant monitoring, that is, determination is made as to whether the condition for activation or the condition for stopping is satisfied at the time when there is reported measurement information or there is downlink scheduling. The conditions for stopping and activation are opposite, either more strict (stopping if one subframe or window fails to satisfy), or loose.

In the second step, a downlink PHY may, in a case of receiving an identifier of activation of the downlink frequency offset pre-compensation, calculate a downlink frequency offset pre-compensation value, and carry out the frequency offset correction to data sent by downlink using the compensation value; alternatively, the downlink PHY may directly receive a downlink frequency offset pre-compensation value sent by a high layer, and carry out frequency offset correction to data sent by downlink using the compensation value. The compensation method may employ UE level to perform compensation, or may employ CP level to perform compensation.

If the frequency offset pre-compensation of UE level is employed, the frequency offset pre-compensation is carried out, at a transmitter, to data on resource occupied by UE (including pilot frequency data), using frequency offset maintained by the UE. This solution may apply to demodulation employing UE level reference signal DMRS (Demodulation Reference Signal), and if the downlink performs demodulation by employing cell reference signal CRS (Cell-specific RS), this method is not recommended; however, the present disclosure does not exclude demodulation employing CRS. If demodulation is performed employing CRS, the compensation may be performed only to data and pilot frequency (CRS) on a resource occupied by the UE, or the compensation may be performed to data on resource occupied by the UE and CRS of the entire bandwidth. The frequency offset compensation method of UE level may employ time domain compensation method and/or frequency domain compensation method.

If the frequency offset pre-compensation of CP level is employed, overall frequency offset correction may be performed to downlink transmission data of each CP, that is, the frequency offset compensation is carried out at a transmitter, downlink data of all users sent on the CP compensate for one frequency offset value, and the compensation method may employ time domain compensation method and/or frequency domain compensation method.

Calculation of the CP level frequency offset pre-compensation value in this step involves the following process.

First, when performing the calculation of the frequency offset pre-compensation value, it is required to determine whether the downlink pre-compensation has been performed to the latest downlink schedule of a history effective frequency offset value maintained by each user (if a base station maintains UE one effective uplink frequency offset value, it is determined whether the downlink frequency offset pre-compensation has been performed at the time of the latest downlink schedule before the report time of the frequency offset value, that is, before uplink schedule of the UE). If it has been performed and an effective value has been reported, this status is called status 0; if it has not been performed or it has been performed but no effective value is reported, this status is called status 1. Then, the pre-compensation

value is $\Pr eFOV^{cpi} = \dfrac{1}{N}\displaystyle\sum_{l=0}^{N-1} \alpha_m \times FO_{uel}^{cpi} \times \beta_{uel}^{cpi}$ ; $m = 0,1$ where each of $\alpha_0$ and $\alpha_1$ represents one correction value of each of the two status, respectively, taking any one value in a range of [0, 1], $\beta_{uel}^{cpi}$ is a weight factor of each user, with a default value of 1, $l$ is UE index value, N denotes a total number of UEs involved in calculation of the pre-compensation value, $i$ is CP index value, and $FO_{uel}^{cpi}$ is a history effective frequency offset value of each user. If the compensation value needs to particularly tend to a user, the weight factor $\beta_{uel}^{cpi}$ may be modified.

In addition, when calculating the compensation value, besides the above calibration method, also may be considered is calculating the pre-compensation value by weighted mean of signal power Ps or SINR (Signal to Interference plus Noise Ratio), that is, performing the calculation using the newest and effective measurement information, i.e. Ps or SINR, maintained by each user on the compensation CP, to employ the method of SINR weighted mean. The calculation method is:

$$\Pr eFOV^{cpi} = \frac{1}{N \times \displaystyle\sum_{l=0}^{N-1} \sin r_{uel}^{cpi}}\sum_{l=0}^{N-1} \alpha_m \times FO_{uel}^{cpi} \times \sin r_{uel}^{cpi} \times \beta_{uel}^{cpi}; m = 0,1$$

If part of the users involved in the calculation do not maintain effective measurement information, they may not involve in the above calculation, or they may be treated conservatively (regarded as status 1). $\beta_{uel}^{cpi}$ is a weight factor of each user, whose default value is 1. If the compensation value needs to particularly tend to a certain user, the weight factor $\beta_{uel}^{cpi}$ may be modified. $\sin r_{uel}^{cpi}$ is signal to interference plus noise ratio. Other parameters have meanings and ranges of value the same as above.

As for the UE level compensation method, respective pre-compensation values are calculated for status maintained by each UE; if N and $\beta_{uel}^{cpi}$ in the above equation are both 1, the UE level frequency offset pre-compensation value is obtained.

If CP level compensation is employed, pre-compensation values on all the latest downlink subframes may be calculated using effective frequency offset values reported on the latest M consecutive uplink subframes (one uplink with multiple downlinks) (calculating according to users within a period of time, to obtain compensation values of all the downlink subframes), and/or frequency offset value compensated for on each downlink subframe may be calculated using a frequency offset value maintained by a user scheduled on the downlink subframe (calculating a compensation value of each downlink subframe), and the present disclosure does not limit which method to employ, both belonging to the protection scope of the present disclosure.

In the third step, the downlink PHY determines, according to the received identifier of frequency offset pre-compensation delivered by the high layer, whether to carry out frequency offset correction to downlink data, and if the high layer indicates that downlink frequency offset correction needs to be carried out, the frequency offset correction is carried out to downlink transmission data using the calculated or received compensation frequency offset value of each downlink subframe. The delivered identifier of pre-compensation may be of CP level, or may be of UE level, or may distinguish between CP level and UE level at the same time. The delivered pre-compensation value may be a pre-compensation value of each downlink scheduled UE, or may be a frequency offset pre-compensation value on the CP.

If the frequency offset pre-compensation of CP level is employed, time domain data sent by each CP downlink employs one frequency offset value to perform pre-compensation, regardless of single UE or multiple UE; if the frequency offset pre-compensation of UE level is employed, a same frequency offset value is compensated to data on resource occupied by each UE or resource occupied by part of UE, the compensated data includes data on resource occupied by the compensation user and pilot frequency. As to how to compensate for pilot frequency data, it is to be noted that, if the terminal employs DMRS to perform measurement and demodulation, the compensation for only DMRS data on a resource block occupied by the compensation user will do; if the terminal employs CRS to perform measurement and demodulation, only CRS on resource occupied by the compensation user may be compensated for, or CRS on the entire bandwidth may be compensated for. The compensation method may employ time domain compensation and/or frequency domain compensation, and the present disclosure describes the time domain compensation method as an example. If input data of a compensation module is frequency domain data, frequency offset correction is carried out to time domain data, using time domain of IFFT (inverse discrete Fourier transform), and then using the calculated frequency offset value, the compensation method is as follows:

$$\tilde{Data}^{cpi}(n) = Data^{cpi}(n) \times e^{-j(\Phi_i + 2 \times \pi \times n \times \mathrm{Pr}eFOV^{cpi}/15000/N_{ifft})}$$

where $\tilde{Data}^{cpi}(n)$ is downlink data after compensation; $Data^{cpi}(n)$ is downlink data before compensation; $\Phi_i$ is an initial phase; Pr$eFOV^{cpi}$ is a frequency offset compensation value; $N_{ifft}$ is system bandwidth; $i$ is CP index value, $n$ is data index value.

As for UE level frequency offset pre-compensation, frequency domain compensation method may be employed, that is, the pre-compensation is made to data of each user in frequency domain, including pilot frequency and data, and finally frequency domain data of all users after finishing compensation are transformed to time domain and sent out via air interface; it is also possible that non-this-user data resource on frequency domain resource of each user are zero-cleared and then transformed to time domain, frequency offset correction is carried out to the UE using time domain pre-compensation method, and finally all the user time domain data after correction are superposed and sent out via air interface.

That is, as for UE level compensation, if the time domain compensation method is employed, it is required to perform zero-clearing process to data on a resource block of non-this users (if full bandwidth CRS pilot frequency data compensation is considered, it is necessary to retain CRS data on the entire bandwidth; if full bandwidth CRS pilot frequency data pre-compensation is not considered, only CRS pilot frequency data on a corresponding resource block are retained), and then IFFT is done to the processed data, transforming to time domain, and the time domain frequency offset pre-compensation is done to data of this UE using the time domain compensation equation. The UE data after compensation may be transformed to frequency domain, it is also possible that all the time domain data of UEs after compensation are superposed, to obtain one time domain data of all the UEs.

If frequency offset pre-compensation is performed in frequency domain, UEs are identified by signs or all the UEs (CP level compensation) perform compensation, and a filter may be used to sliding filter the frequency domain, which may be expressed as:

$$\tilde{Data}(k) = Data(k) \times e^{-j\Phi_m} + \sum_{\substack{l=-L \\ l \neq 0}}^{L} \frac{-PreFOV_{UE_f}^{cpi} \times e^{-j(\Phi_m + \pi l / N_{ifft})}}{15000 \times l} \times Data(k+l)$$

*l=-L, -L+1,..., -1,1,2,..., L*

where *l* denotes a number of interval subcarrier waves between a target subcarrier wave and a reference subcarrier wave, 2*L*+1 denotes a number of orders of the filter, L denotes a length of a single order, $\phi_m$ denotes a compensation value for an initial phase of UE on the sign *m*, $PreFOV_{UE_f}^{cpi}$ denotes a pre-compensation value of the *f*-th UE on CPi, and *k* is an index value of a subcarrier wave.

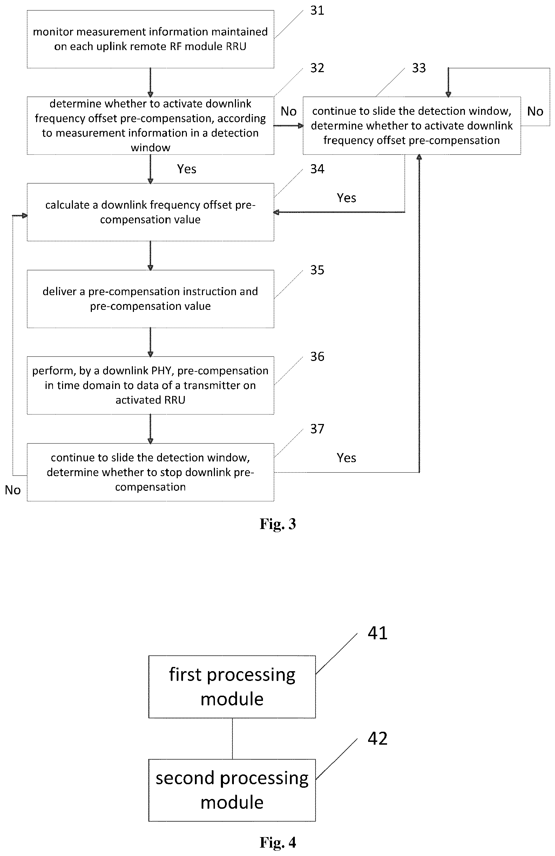

Taking determination, using a terminal position, whether it is necessary to perform the pre-compensation as an example, the downlink signal processing method according to an embodiment of the present disclosure may be a process as shown in Fig. 3, including step 31 to step 37.

At step 31, monitor measurement information maintained on each uplink remote RF module RRU.

At step 32, determine whether to activate downlink frequency offset pre-compensation, according to the measurement information in a detection window; if no, go to step 33; if yes, go to step 34.

At step 33, continue to slide the detection window, determining whether to activate the downlink frequency offset pre-compensation, if no, perform the present step again; if yes, go to step 34.

At step 34, calculate a downlink frequency offset pre-compensation value.

At step 35, deliver a pre-compensation instruction and the pre-compensation value.

At step 36, perform, by a downlink PHY, the pre-compensation in time domain to data of a transmitter on activated RRU.

At step 37, continue to slide the detection window, determine whether to stop the downlink pre-compensation; if yes, return to step 33; if no, return to step 34.

As can be seen from above, the solutions provided by embodiments of the present disclosure can lower requirements on frequency offset toleration of a terminal, and can resolve the problem of signal deterioration after superposition of downlink signals coming from different directions, thereby improving uplink and downlink signal quality and link stability.

The following describes, by examples, the downlink signal processing method according to an embodiment of the present disclosure.

Description is given taking CP level compensation as an example, discriminating a meeting-car scenario from a non-meeting-car scenario.

Example 1: Non-Meeting-Car Scenario

Step one: MAC (Medium Access Control) monitors frequency offset values reported by all the UEs maintained on each CP, respectively, the monitoring window has a size of N uplink subframes or effective frequency offset values reported within T ms. If the frequency offset values in the monitoring window satisfy a condition that 90% of the frequency offset values are at a positive direction or a negative direction, and frequency offset values in a same direction are all greater than m Hz, downlink frequency offset pre-compensation is started; if the condition that 90% of the frequency offset values are at a positive direction or a negative direction is not satisfied, or there is a frequency offset value not greater than m Hz among frequency offset values in the same direction, monitoring is continued, sliding the monitoring window or the time window until the condition for activation of the downlink pre-compensation is satisfied. If no frequency offset value is reported after a period of time, the monitoring window or the time window restarts timing.

Step two: calculate a downlink frequency offset pre-compensation value on each CP. The present embodiment assumes a total of 2 CPs, and a total of 10 downlink users are scheduled on each transmission time interval TTI, a frequency offset value of each user maintained on each CP is expressed, respectively, as $FO_{uel}^{CPi}$ where *i* = 0, 1, *l* = 0, 1, ..., 9. Assuming that the first 5 of the users have a frequency offset maintaining status of 0, and the last 5 users maintain a frequency offset in status 1, description of the present embodiment takes an example in which the power of each user is not considered (not considered are $\beta_{uel}^{cpi}$, signal power Ps, signal to interference plus noise ratio SINR, single weighted average, only considered is status of UE), and calculates the frequency offset pre-compensation value corresponding to the two CPs, respectively, that is:

$$\Pr eFOV^{cpi} = \frac{1}{10}(\sum_{l=0}^{4} \alpha_0 \times FO_{uel}^i + \sum_{l=5}^{9} \alpha_1 \times FO_{uel}^i),$$

where $i$ = 0, 1.

Step three: CMAC delivers an identifier of activation of the downlink frequency offset pre-compensation and the pre-compensation value to a downlink PHY.

The present application example employs time domain frequency offset compensation, that is, the frequency offset pre-compensation performed in time domain using the characteristics that one phase of the frequency offset continuously changes. The frequency offset pre-compensation is done to time domain data after inserting CP for the compensated data, the process of compensation may employ compensation according to signs, may also employ separate compensation according to sampling points, which method to employ is not limited by the present disclosure. Assuming a example of a bandwidth of 20 MHz, after inserting CP, one downlink subframe data has a length of 30720, expressed as

$Data^{cpi}(n)$, $n$ = 0,1,···,30719, $i$ = 0,1,···,$K$-1, where $i$ is CP index value, $K$ is the number of CPs. Frequency offset correction is carried out to transmission time domain data on the two CPs, respectively, using the frequency offset value calculated in Step two, that is

$$\tilde{Data}^{cp0}(n) = Data^{cp0}(n) \times e^{-j(2\times\pi\times n\times\mathrm{Pr}eFOV^{cp0}/15000/2048+\Phi_0)};$$

$$\tilde{Data}^{cp1}(n) = Data^{cp1}(n) \times e^{-j(2\times\pi\times n\times\mathrm{Pr}eFOV^{cp1}/15000/2048+\Phi_1)};$$

Sending out via air interface, respectively, using time domain data after compensation $\tilde{Data}^{cp1}$ and $\tilde{Data}^{cp0}$.

Example 2: Meeting-Car Scenario

The present application example takes into consideration a phenomenon in which, in a multiple-user access status, frequency offsets of all users do not tend to a same direction, and the difference is significant. Thus, the present application example states, in this scenario, how the embodiment of the present disclosure performs downlink frequency offset pre-compensation in the manner of scheduling. Scheduling requires to ensure that frequency offset values of downlink users scheduled on a same TTI at least tend to a same direction, or the difference is very small between frequency offset values of users scheduled on a same TTI. Steps are described as follows.

Step one: a high layer monitors effective frequency offset values of the users reported on one of the CPs within one sliding time window, with a window length of T ms, or monitors user effective frequency offset values maintained on all the CPs. User are classified into Class F according to the frequency offset value, the present embodiment is described taking an example of 4 classes. Frequency offset values of the first class users are in [-F1, F1], that is, the frequency offset is near 0; frequency offset values of the second class users are in [F1, F2], frequency offset values of the third class users are in [-F2, -F1], and the fourth class users have not maintained effective frequency offset values.

Step two: a downlink scheduler performs respective downlink scheduling based on user classification of Step one, and ensures that 90% of users scheduled on a same downlink subframe belong to a same class. If the condition is not satisfied, the downlink frequency offset pre-compensation is not carried out, going on to slide the time window, until the condition is satisfied when downlink frequency offset pre-compensation is activated.

Step three: calculate a downlink frequency offset pre-compensation value on each CP. The present embodiment assumes a total of 2 CPs, and a total of 10 downlink users are scheduled on each TTI, a frequency offset value of each user maintained on each CP is expressed, respectively, as $FO_{uel}^{CPi}$ where $i$ = 0, 1 $l$ = 0, 1, ..., 9. Assuming that the first 5 of the users have a frequency offset maintaining status of 0, and the last 5 users maintain a frequency offset in status 1, description of the present embodiment takes an example in which the power of each user is not considered (not considered are $\beta_{uel}^{cpi}$, signal power Ps, signal to interference plus noise ratio SINR, single weighted average, only considered is status of UE), and calculates the frequency offset pre-compensation value corresponding to the two CPs, respectively, that is:

$$\Pr eFOV^{cpi} = \frac{1}{10}(\sum_{l=0}^{4}\alpha_0 \times FO_{uel}^{i} + \sum_{l=5}^{9}\alpha_1 \times FO_{uel}^{i})$$,

where $i = 0, 1$.

Step four, the high layer delivers an identifier of activation of downlink frequency offset pre-compensation to a downlink PHY, the downlink PHY constantly monitors this identifier for whether to perform the downlink frequency offset pre-compensation. If the downlink frequency offset pre-compensation is activated, the downlink frequency offset pre-compensation is carried out using the frequency offset pre-compensation value on each CP calculated in Step two.

The present application example employs time domain frequency offset compensation, that is, frequency offset pre-compensation performed in time domain using the characteristics that one phase of the frequency offset continuously changes. The frequency offset pre-compensation is done to time domain data after inserting CP for the compensated data, the process of compensation may employ compensation according to signs, may also employ separate compensation according to sampling points, which method to employ is not limited by the present disclosure. Assuming a example of a bandwidth of 20MHz, after inserting CP, one downlink subframe data has a length of 30720, expressed as $Data^{cpi}(n)$, $n = 0,1,\cdots, 30719$, $i = 0,1,\cdots,K$-1, where $i$ is CP index value, K is the number of CPs. Frequency offset correction is carried out to transmission time domain data on the two CPs, respectively, using the frequency offset value calculated in Step two, that is

$$\tilde{Data}^{cp0}(n) = Data^{cp0}(n) \times e^{-j(2\times\pi\times n\times \Pr eFOV^{cp0}/15000/2048+\Phi_0)}$$ ;

$$\tilde{Data}^{cp1}(n) = Data^{cp1}(n) \times e^{-j(2\times\pi\times n\times \Pr eFOV^{cp1}/15000/2048+\Phi_1)}$$

Finally sending out via air interface, respectively, using time domain data after compensation $\tilde{Data}^{cp1}$ and $\tilde{Data}^{cp0}$.

It is to be noted that, the solution provided by an embodiment of the present disclosure may apply to orthogonal frequency division multiplexing OFDM system.

Embodiment 3

As shown in Fig. 4, the downlink signal processing device according to Embodiment 3 of the present disclosure includes a first processing module 41 and a second processing module 42.

The first processing module 41 is configured to obtain a frequency offset pre-compensation instruction according to a terminal parameter.

The second processing module 42 is configured to deliver the frequency offset pre-compensation instruction to a downlink physical layer of a base station to instruct the downlink physical layer of the base station to start or stop, according to the frequency offset pre-compensation instruction, carrying out frequency offset correction to a corresponding downlink signal.

The downlink signal processing device according to Embodiment 3 of the present disclosure is able to timely and effectively carry out frequency offset correction to downlink data by obtaining a frequency offset pre-compensation instruction according to a terminal parameter and delivering the frequency offset pre-compensation instruction to a downlink physical layer of a base station to instruct the downlink physical layer of the base station to start or stop, according to the frequency offset pre-compensation instruction, carrying out frequency offset correction to a corresponding downlink signal. The method is not only applicable to a scenario where a single terminal is involved, but also to a multi-terminal scenario, thereby resolving the problem in the existing art that the signal power may be declined to the trough after superposition due to a frequency offset difference among multiple downlink signals.

The terminal parameter includes a terminal frequency offset value or a terminal position.

If the frequency offset pre-compensation instruction is configured to instruct the downlink physical layer of the base station to start, according to the frequency offset pre-compensation instruction, carrying out frequency offset correction to the corresponding downlink signal, the downlink signal processing device may also include a first delivering module configured to deliver a frequency offset pre-compensation value to the downlink physical layer of the base station.

Before delivering the frequency offset pre-compensation value to the downlink physical layer of the base station, the device may also include a first calculating module configured to obtain the frequency offset pre-compensation value by calculation based on the terminal frequency offset value, or the terminal frequency offset value and a signal power, or the terminal frequency offset value and a signal to interference plus noise ratio (SINR).

If the terminal frequency offset value is a terminal frequency offset value of terminals reported during a period of time, the obtained frequency offset pre-compensation value is applied to all antenna groups; if the terminal frequency offset value is a terminal frequency offset value of terminals on one antenna group, the obtained frequency offset pre-compensation value is applied only to that antenna group.

The first processing module may include: a first processing submodule, configured to determine, according to a terminal frequency offset value of a scheduling terminal, whether to start or stop carrying out frequency offset correction to a corresponding downlink signal delivered by a pertaining antenna group, to obtain the frequency offset pre-compensation instruction; or, a second processing submodule, configured to determine, according to a terminal frequency offset value maintained by the same terminal, whether to start or stop carrying out frequency offset correction to a downlink signal delivered to that terminal, to obtain the frequency offset pre-compensation instruction.

In other words, the frequency offset pre-compensation instruction of an antenna group level (for the same antenna group) or a terminal level (for the same terminal) is obtained according to the terminal frequency offset value, and the determination may be made according to a size or a direction of the terminal frequency offset value. If a condition is satisfied that sizes of a preset number of terminal frequency offset values are greater than a threshold with a preset probability, or if a condition is satisfied that directions of a preset number of terminal frequency offset values are in a same direction with a preset probability, it is determined to carry out pre-compensation; if the condition that sizes of the preset number of terminal frequency offset values are greater than the threshold with the preset probability is not satisfied, and the condition that directions of the preset number of terminal frequency offset values are in the same direction with the preset probability is not satisfied, it is determined not to carry out pre-compensation.

Alternatively, it is directly determined whether there is a terminal frequency offset value maintained on the antenna group, and if there is, the pre-compensation is carried out; if there is not, the pre-compensation is not carried out.

Alternatively, according to an absolute value of a terminal frequency offset value of the same terminal on respective antenna groups, if a condition is satisfied that the absolute value is greater than a threshold with a preset probability, the pre-compensation is carried out on a downlink signal delivered to that terminal; if the condition that the absolute value is greater than the threshold with the preset probability is not satisfied, the pre-compensation is not carried out.

Alternatively, according to a terminal frequency offset value of a terminal on an antenna group, if the value is greater than a threshold, the pre-compensation is carried out when the antenna group delivers data to the terminal; if the value is not greater than the threshold, the pre-compensation is not carried out.

Considering a case of meeting-car (a phenomenon that there is a large difference among terminal frequency offset values maintained by a same antenna group, or that terminal frequency offset values maintained by a same antenna group are in opposite directions, that is, terminals are not at a same direction of motion), the downlink signal processing device may also include a first determining module configured to determine whether terminal frequency offset values maintained by a same antenna group belong to multiple terminals, and whether a difference among the terminal frequency offset values of the terminals exceeds a preset value.

A fourth processing module is configured to, if yes, divide the multiple terminals into groups, and a preset number of terminals on a same downlink subframe belong to a same group when controlling scheduling; and determine, according to a terminal frequency offset value of a scheduling terminal, whether to start or stop carrying out frequency offset correction to a corresponding downlink signal delivered by a pertaining antenna group, to obtain the frequency offset pre-compensation instruction.

An execution module is configured to, if no, directly perform the determining, according to a terminal frequency offset value of a scheduling terminal, whether to start or stop carrying out frequency offset correction to a corresponding downlink signal delivered by a pertaining antenna group, to obtain the frequency offset pre-compensation instruction.

The classification into groups is made in such a manner that a difference among frequency offset values of terminals of a same group is smaller than a certain threshold, or frequency offset values of terminals of a same group are at a same direction.

An embodiment of the present disclosure also provides another determination method, the first processing module may include a third processing submodule configured to determine, according to a terminal position, whether to start or stop carrying out frequency offset correction to a corresponding downlink signal delivered by a pertaining antenna group, to obtain the frequency offset pre-compensation instruction.

Specifically, a position state of a terminal may be determined according to measurement information such as a path loss or a signal quality reported by the terminal, or measurement information maintained by the terminal, and if a proportion of terminals at a far point position state is greater than a threshold, the pre-compensation is carried out; if the proportion of terminals at a far point position state is not greater than the threshold, the pre-compensation is not carried out.

When a position of a terminal is uncertain, the terminal is regarded as a terminal at a far point position state.

The above-described practical embodiments of the downlink signal processing method involving a high layer side of a base station are all applicable to embodiments of the downlink signal processing device, equally capable of achieving the same technical effects.

To address the above-described technical problem, an embodiment of the present disclosure also provides a base station, including the above-described downlink signal processing device.

The above-described practical embodiments of the downlink signal processing device are all applicable to embodiments of the base station, equally capable of achieving the same technical effects.

Embodiment 4

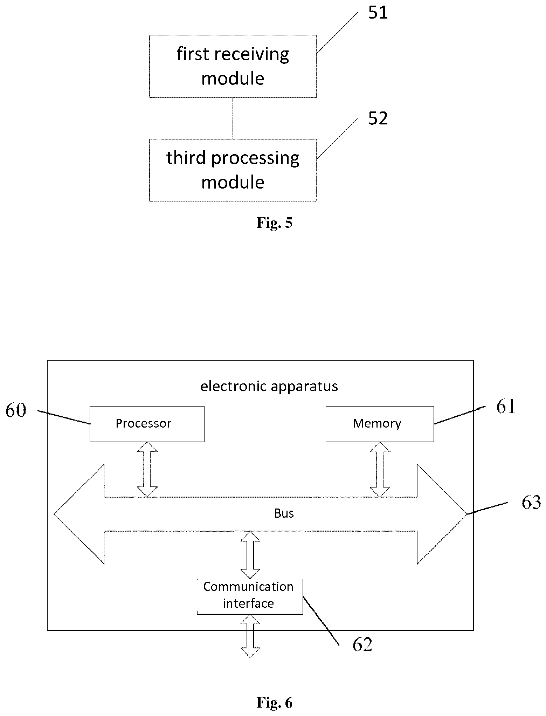

As shown in Fig. 5, the downlink signal processing device according to Embodiment 4 of the present disclosure includes a first receiving module 51 and a third processing module 52.

The first receiving module 51 is configured to receive a frequency offset pre-compensation instruction sent by a high layer of a base station; and

The third processing module 52 is configured to start or stop, according to the frequency offset pre-compensation instruction, carrying out frequency offset correction to a corresponding downlink signal.

The downlink signal processing device according to Embodiment 4 of the present disclosure is able to timely and effectively carry out frequency offset correction to downlink data by receiving a frequency offset pre-compensation instruction sent by a high layer of a base station and starting or stopping, according to the frequency offset pre-compensation instruction, carrying out frequency offset correction to a corresponding downlink signal. The method is not only applicable to a scenario where a single terminal is involved, but also to a multi-terminal scenario, thereby resolving the problem in the existing art that the signal power may be declined to the trough after superposition due to a frequency offset difference among multiple downlink signals.

A frequency offset pre-compensation value for carrying out frequency offset correction may come from two sources.

First, if the frequency offset pre-compensation instruction is configured to instruct starting carrying out frequency offset correction to a corresponding downlink signal, the downlink signal processing device may also include a second receiving module configured to receive a frequency offset pre-compensation value sent by the high layer of the base station.

The third processing module may include a fourth processing submodule configured to start, according to the frequency offset pre-compensation instruction and the frequency offset pre-compensation value, carrying out frequency offset correction to a corresponding downlink signal.

Second, the downlink signal process device may also include a second calculating module configured to obtain the frequency offset pre-compensation value by calculation based on a terminal frequency offset value, or a terminal frequency offset value and a signal power, or a terminal frequency offset value and a signal to interference plus noise ratio (SINR).

The third processing module may include a fifth processing submodule configured to start, according to the frequency offset pre-compensation instruction and the frequency offset pre-compensation value, carrying out frequency offset correction to a corresponding downlink signal.

The third processing module may include a sixth processing submodule configured to carry out, according to the frequency offset pre-compensation instruction, frequency offset correction in time domain or frequency domain to a downlink signal delivered to a corresponding scheduling terminal by a same antenna group; or, a seventh processing submodule configured to carry out, according to the frequency offset pre-compensation instruction, frequency offset correction in time domain or frequency domain to a downlink signal delivered to a same scheduling terminal.

The third processing module may include an eighth processing submodule configured to start, according to the frequency offset pre-compensation instruction, carrying out frequency offset correction in frequency domain to a corresponding downlink signal, using the following calculation formula:

$$\tilde{Data}(k) = Data(k) \times e^{-j\Phi_m} + \sum_{\substack{l=-L \\ l \neq 0}}^{L} \frac{-\mathrm{PreFOV}_{UE_f}^{cpi} \times e^{-j(\Phi_m + \pi l/N_{ifft})}}{15000 \times l} \times Data(k+l)$$

l=-L, -L+1, ..., -1,1,2,..., L

where *I* denotes a number of interval subcarrier waves between a target subcarrier wave and a reference subcarrier wave, 2*L*+1 denotes a number of orders of a filter, $\phi_m$ denotes a compensation value for an initial phase of UE on the sign *m*, $\mathrm{Pr\,eFOV}_{UE_f}^{cpi}$ denotes a pre-compensation value of the *f*-th UE on CPi, and *k* is an index value of a subcarrier wave.

The above-described practical embodiments of the downlink signal processing method involving a downlink physical layer side of a base station are all applicable to embodiments of the downlink signal processing device, equally capable of achieving the same technical effects.

To address the above-described technical problem, an embodiment of the present disclosure also provides a base station, including the downlink signal processing device according to Embodiment 4; and may also include the downlink signal processing device according to Embodiment 3.

The above-described practical embodiments of the downlink signal processing device are all applicable to embodiments of the base station, equally capable of achieving the same technical effects.

In practical applications, the above-described first processing module, the second processing module, the first delivering module, the first calculating module, the first processing submodule, the second processing submodule, the first determination module, the fourth processing module, the execution module, the third processing submodule, and the second calculating module may be implemented by CPU; without doubt, they may be implemented by other equipment according to actual situation.

The above-described first receiving module, the third processing module, the second receiving module, the compensation module, the fourth processing submodule, the fifth processing submodule, the sixth processing submodule, the seventh processing submodule, and the eighth processing submodule may be implemented by DSP; without doubt, they may be implemented by other equipment according to actual situation.

An embodiment of the present disclosure further provides a non-transient computer readable storage medium storing computer executable instructions, the computer executable instructions configured to perform the method of any of the above-described embodiments.

An embodiment of the present disclosure further provides an electronic apparatus. Referring to Fig. 6, the electronic apparatus includes: at least one processor 60, for example, one processor 60 in Fig. 6; and a memory 61, and may also include a communication interface 62 and a bus 63. The processor 60, the communication interface 62, the memory 61 may carry out communications between each other via the bus 63. The communication interface 62 may be used in information transmission. The processor 60 may call logical instructions in the memory 61, to perform the method of the above embodiments.

Furthermore, the above logical instructions in the memory 61 may be implemented by a form of software functional unit, and when sold and used as an independent product, may be stored in one computer readable storage medium.

The memory 61, as a computer readable storage medium, may be used to store software programs, computer executable programs, such as program instructions/modules corresponding to the method of embodiments of the present disclosure. The processor 60 performs functional application and data processing, that is, implementing the downlink signal processing method of the above method embodiments, by running software programs, instructions and modules stored in the memory 61.

The memory 61 may include a program storage region and a data storage region, wherein the program storage region may store an operating system, an application program required for at least one function; the data storage region may store data created according to usage of terminal apparatus, and the like. In addition, the memory 61 may include a high speed random access memory, and may also include non-volatile memory.

The technical solutions of the present disclosure may be implemented in a form of software product, the computer software product is stored in a storage medium, including one or more instructions to cause a computer apparatus (which may be a personal computer, a server, or a network apparatus or the like) to perform all or part of the steps of the method according to the embodiments of the present disclosure. The above storage medium may be non-transient storage medium, including: a variety of media capable of storing program codes, such as a USB drive, a removable hard disk, a Read-only memory (ROM), a random access memory (RAM), a magnetic disk or an optical disk or the like, and may also be transient storage medium.

It is to be noted that, many functional components described in this specification are called modules/submodules, so as to more particularly emphasize independence of their forms of implementation.

In embodiments of the present disclosure, a module/submodule may be implemented using software, so as to be executed by various kinds of processors. For example, one identified executable code may include one or more physical or logical blocks of computer instructions, for example, it may be constructed as an object, a process or a function. Nevertheless, executable codes of the identified module are not necessarily physically collocated, and may include different instructions stored on different locations, when these instructions logically combine together, they construct a module and realize functions of the module.

Actually, an executable code module may be a single instruction or many instructions, and even may be distributed on multiple different code segments, distributed in different programs, and distributed over multiple memory devices. Similarly, operation data may be identified in a module, and may be implemented in any suitable form and be organized in a data structure of any suitable type. The operation data may be collected as a single data set, or may be distributed on different locations (including on different storage devices), and may be present on a system or network at least partly merely as an electronic signal.

When a module may be implemented using software, considering the existing level of hardware technology, for a module implementable as software, without concerning the cost, one skilled in the art may build a corresponding hardware circuit to realize the corresponding function, the hardware circuit including a regular very large scale integrated (VLSI) circuit or a gate array and an existing semiconductor such as a logical chip, a transistor or other discrete element. The module may also be implemented using a programmable hardware device, such as a field programmable gate array, a programmable array logic, a programmable logical device and the like.

The foregoing has described implementations of the present disclosure, and it is to be noted that, for an ordinary person skilled in the art, various improvements and modifications can be made without departing from the scope of the embodiments of the present disclosure, and these improvements and modifications fall within the protection scope of the present disclosure.

**Claims**

1. A downlink signal processing method, comprising:

    obtaining a frequency offset pre-compensation instruction according to a terminal parameter; and
    delivering the frequency offset pre-compensation instruction to a downlink physical layer of a base station to instruct the downlink physical layer of the base station to start or stop, according to the frequency offset pre-compensation instruction, carrying out frequency offset correction to a corresponding downlink signal.

2. The method according to claim 1, wherein the terminal parameter comprises a terminal frequency offset value or a terminal position.

3. The method according to claim 1, wherein, if the frequency offset pre-compensation instruction is configured to instruct the downlink physical layer of the base station to start, according to the frequency offset pre-compensation instruction, carrying out frequency offset correction to the corresponding downlink signal, then the step of delivering the frequency offset pre-compensation instruction to the downlink physical layer of the base station further comprises: delivering a frequency offset pre-compensation value to the downlink physical layer of the base station.

4. The method according to claim 3, wherein, before the step of delivering the frequency offset pre-compensation value to the downlink physical layer of the base station, the method further comprises:

    obtaining the frequency offset pre-compensation value by calculation based on a terminal frequency offset value, or
    a terminal frequency offset value and a signal power, or
    a terminal frequency offset value and a signal to interference plus noise ratio.

5. The method according to claim 1, wherein the step of obtaining the frequency offset pre-compensation instruction according to the terminal parameter comprises:

    determining, according to a terminal frequency offset value of a scheduling terminal, whether to start or stop carrying out frequency offset correction to a corresponding downlink signal delivered by a pertaining antenna group, to obtain the frequency offset pre-compensation instruction; or
    determining, according to a terminal frequency offset value maintained by a same terminal, whether to start or stop carrying out frequency offset correction to a downlink signal delivered to that terminal, to obtain the frequency offset pre-compensation instruction.

6. The method according to claim 5, wherein before the step of determining, according to the terminal frequency offset value of the scheduling terminal, whether to start or stop carrying out frequency offset correction to the corresponding downlink signal delivered by the pertaining antenna group, to obtain the frequency offset pre-compensation instruction, the method further comprises:

determining whether terminal frequency offset values maintained by a same antenna group belong to multiple terminals, and whether a difference between the terminal frequency offset value of each terminal exceeds a preset value;

if exceeding, dividing the multiple terminals into groups, and controlling that a preset number of terminals on a same downlink subframe belong to a same group at time of scheduling; and determining, according to the terminal frequency offset value of the scheduling terminal, whether to start or stop carrying out frequency offset correction to the corresponding downlink signal delivered by the pertaining antenna group, to obtain the frequency offset pre-compensation instruction; and

if not exceeding, directly performing the step of determining, according to the terminal frequency offset value of the scheduling terminal, whether to start or stop carrying out frequency offset correction to the corresponding downlink signal delivered by the pertaining antenna group, to obtain the frequency offset pre-compensation instruction.

7. The method according to claim 1, wherein the step of obtaining the frequency offset pre-compensation instruction according to the terminal parameter comprises:

determining, according to a terminal position, whether to start or stop carrying out frequency offset correction to a corresponding downlink signal delivered by a pertaining antenna group, to obtain the frequency offset pre-compensation instruction.

8. A downlink signal processing device, comprising:

a first processing module configured to obtain a frequency offset pre-compensation instruction according to a terminal parameter; and

a second processing module configured to deliver the frequency offset pre-compensation instruction to a downlink physical layer of a base station to instruct the downlink physical layer of the base station to start or stop, according to the frequency offset pre-compensation instruction, carrying out frequency offset correction to a corresponding downlink signal.

9. A downlink signal processing method, comprising:

receiving a frequency offset pre-compensation instruction sent by a high layer of a base station; and

starting or stopping, according to the frequency offset pre-compensation instruction, carrying out frequency offset correction to a corresponding downlink signal.

10. The method according to claim 9, wherein, if the frequency offset pre-compensation instruction is configured to instruct starting carrying out frequency offset correction to the corresponding downlink signal, then the step of receiving a frequency offset pre-compensation instruction sent by a high layer of a base station further comprises:

receiving a frequency offset pre-compensation value sent by the high layer of the base station;

the step of starting or stopping, according to the frequency offset pre-compensation instruction, carrying out frequency offset correction to the corresponding downlink signal comprises:

starting, according to the frequency offset pre-compensation instruction and the frequency offset pre-compensation value, carrying out frequency offset correction to the corresponding downlink signal.

11. The method according to claim 9, wherein, after the step of receiving the frequency offset pre-compensation instruction sent by the high layer of the base station, the method further comprises:

obtaining a frequency offset pre-compensation value by calculation based on
a terminal frequency offset value, or
a terminal frequency offset value and a signal power, or
a terminal frequency offset value and a signal to interference plus noise ratio;

the step of carrying out frequency offset correction to the corresponding downlink signal according to the frequency offset pre-compensation instruction comprises:

starting, according to the frequency offset pre-compensation instruction and the frequency offset pre-compensation value, carrying out frequency offset correction to the corresponding downlink signal.

12. The method according to claim 9, wherein the step of starting or stopping, according to the frequency offset pre-compensation instruction, carrying out frequency offset correction to the corresponding downlink signal comprises:

carrying out, according to the frequency offset pre-compensation instruction, frequency offset correction in time domain or frequency domain to a downlink signal delivered to a corresponding scheduling terminal by a same antenna group; or

carrying out, according to the frequency offset pre-compensation instruction, frequency offset correction in time domain or frequency domain to a downlink signal delivered to a same scheduling terminal.

13. The method according to claim 9, wherein the step of starting or stopping, according to the frequency offset pre-compensation instruction, carrying out frequency offset correction to the corresponding downlink signal comprises: starting, according to the frequency offset pre-compensation instruction, carrying out frequency offset correction in frequency domain to the corresponding downlink signal by using the following calculation formula:

$$\tilde{Data}(k) = Data(k) \times e^{-j\Phi_m} + \sum_{\substack{l=-L \\ l\neq 0}}^{L} \frac{-\mathrm{PreFOV}_{UE_f}^{cpi} \times e^{-j(\Phi_m + \pi l/N_{ifft})}}{15000 \times l} \times Data(k+l)$$

$l$=-L, -L+1, ..., -1,1,2,..., L

where $l$ denotes a number of interval subcarrier waves between a target subcarrier wave and a reference subcarrier wave, $2L$+1 denotes a number of orders of a filter, $\phi_m$ denotes a compensation value for an initial phase of UE on a sign $m$, $\mathrm{Pr\,eFOV}_{UE_f}^{cpi}$ denotes a pre-compensation value of a $f$-th UE on CPi, and $k$ is an index value of a subcarrier wave.

14. A downlink signal processing device, comprising:

a first receiving module configured to receive a frequency offset pre-compensation instruction sent by a high layer of a base station; and

a third processing module configured to start or stop, according to the frequency offset pre-compensation instruction, carrying out frequency offset correction to a corresponding downlink signal.

15. A non-transient computer readable storage medium storing computer executable instructions, the computer executable instructions are configured to perform the method according to any one of claims 1-7.

16. A non-transient computer readable storage medium storing computer executable instructions, the computer executable instructions are configured to perform the method according to any one of claims 9-13.

obtain a frequency offset pre-compensation instruction
according to a terminal parameter                           / 11

deliver the frequency offset pre-compensation instruction
to a downlink physical layer of a base station to instruct
the downlink physical layer of the base station to start or
stop, according to the frequency offset pre-compensation    / 12
instruction, carrying out frequency offset correction to a
corresponding downlink signal

Fig. 1

receive a frequency offset pre-compensation
instruction sent by a high layer of a base station          / 21

start or stop, according to the frequency offset pre-
compensation instruction, carrying out frequency            / 22
offset correction to a corresponding downlink signal

Fig. 2

monitor measurement information maintained on each uplink remote RF module RRU — 31

determine whether to activate downlink frequency offset pre-compensation, according to measurement information in a detection window — 32

No →

continue to slide the detection window, determine whether to activate downlink frequency offset pre-compensation — 33

No →

Yes ↓

calculate a downlink frequency offset pre-compensation value — 34

Yes →

deliver a pre-compensation instruction and pre-compensation value — 35

perform, by a downlink PHY, pre-compensation in time domain to data of a transmitter on activated RRU — 36

continue to slide the detection window, determine whether to stop downlink pre-compensation — 37

Yes →

No

**Fig. 3**

first processing module — 41

second processing module — 42

**Fig. 4**

51

first receiving
module

52

third processing
module

**Fig. 5**

electronic apparatus

60

Processor

61

Memory

63

Bus

Communication
interface

62

**Fig. 6**

# INTERNATIONAL SEARCH REPORT

| International application No. |
|---|
| **PCT/CN2017/084211** |

**A. CLASSIFICATION OF SUBJECT MATTER**

H04L 27/00 (2006.01) i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS, CNTXT, CNKI, VEN, WOTXT: downlink, uplink, frequency deviation, frequency offset, compensat+, pre-compensat+, pre-correct+, Doppler, start, end, group

**C. DOCUMENTS CONSIDERED TO BE RELEVANT**

| Category* | Citation of document, with indication, where appropriate, of the relevant passages | Relevant to claim No. |
|---|---|---|
| X | CN 105337693 A (CHINA MOBILE COMMUNICATIONS CORPORATION), 17 February 2016 (17.02.2016), description, paragraphs [0050]-[0058], [0073]-[0077] and [0091]-[0093] | 1-5, 7-16 |
| Y | CN 105337693 A (CHINA MOBILE COMMUNICATIONS CORPORATION), 17 February 2016 (17.02.2016), description, paragraphs [0050]-[0058], [0073]-[0077] and [0091]-[0093] | 6 |
| Y | CN 101184075 A (HUAWEI TECHNOLOGIES CO., LTD.), 21 May 2008 (21.05.5008), abstract | 6 |
| A | US 2014086083 A1 (ELECTRONICS AND TELECOMMUNICATIONS RESEARCH INSTITUTE), 27 March 2014 (27.03.2014), the whole document | 1-16 |

☐ Further documents are listed in the continuation of Box C.　　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 July 2017 (11.07.2017) | **09 August 2017 (09.08.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Qian** Telephone No.: (86-10) **62089374** |
|---|---|

Form PCT/ISA/210 (second sheet) (July 2009)

## INTERNATIONAL SEARCH REPORT
### Information on patent family members

| | International application No. |
|---|---|
| | **PCT/CN2017/084211** |

| Patent Documents referred in the Report | Publication Date | Patent Family | Publication Date |
|---|---|---|---|
| CN 105337693 A | 17 February 2016 | None | |
| CN 101184075 A | 21 May 2008 | US 8483159 B2 | 09 July 2013 |
| | | US 2010246528 A1 | 30 September 2010 |
| | | CN 101184075 B | 04 January 2012 |
| | | WO 2009076891 A1 | 25 June 2009 |
| | | JP 2010537524 A | 02 December 2010 |
| US 2014086083 A1 | 27 March 2014 | US 9497721 B2 | 15 November 2016 |
| | | KR 20140041348 A | 04 April 2014 |

Form PCT/ISA/210 (patent family annex) (July 2009)